# EUROPÄISCHE PATENTANMELDUNG

(11) **EP 0 754 578 A2**
(43) Veröffentlichungstag der Anmeldung: **22.01.1997**
(21) Anmeldenummer: 96108742.6
(22) Anmeldetag: 31.05.1996
(51) Int. Cl.: B60H 1/00

(54) **Verfahren zur Steuerung einer Fahrzeuginnenraum-Klimatisierungseinrichtung**

(30) Priorität: 20.07.1995 DE 19526450
(71) Anmelder: MERCEDES-BENZ AG, 70327 Stuttgart (DE)
(72) Erfinder: Heinle, Dieter, 73655 Plüderhausen (DE)

(57) **Zusammenfassung**

- 2.1: Es ist bekannt, den Fahrzeuginnenraum durch eine Klimatisierungseinrichtung mit mehreren Klimatisierungskanälen, die beispielsweise eine Heizungs- und/oder Klimaanlage umfaßt, zu klimatisieren.
- 2.2: Es wird ein Verfahren zur Steuerung einer solchen Innenraumklimatisierungseinrichtung vorgeschlagen, bei dem die von den einzelnen Klimatisierungskanälen bereitgestellte Klimatisierungsleistung sitzbelegungsabhängig gesteuert wird. Dies ermöglicht eine sehr bedarfsgerechte Einstellung der Klimatisierungswirkung in den verschiedenen Fahrzeuginnenraumbereichen.
- 2.3: Verwendung in Kraftfahrzeugen.

## Beschreibung

Die Erfindung bezieht sich auf ein Verfahren zur Steuerung einer Innenraumklimatisierungseinrichtung eines Kraftfahrzeuges, die mehrere separat ansteuerbare Klimatisierungskanäle für unterschiedliche Fahrzeuginnenraumzonen aufweist. Derartige Verfahren sind insbesondere zur Steuerung moderner Klimaanlagen mit zwei oder mehr separat ansteuerbaren Klimatisierungskanälen bekannt, die zur Klimatisierung schwerpunktmäßig unterschiedlicher Fahrzeuginnenraumzonen dienen. Über Automatikfunktionen erfolgt dabei häufig eine weitgehend selbsttätige Steuerung bzw. Regelung der Innenraumklimatisierung, wozu meist stufenlos ansteuerbare Aktuatoren, wie Gebläse und/oder Lüftungsklappen, aktiviert werden. Durch diese herkömmliche, automatische Klimatisierung wird das Fahrzeug über alle Klimatisierungskanäle gleichmäßig im gesamten Innenraum klimatisiert, auch dort, wo sich momentan keine Fahrzeuginsassen aufhalten.

In der Patentschrift US 5.176.201 und der Offenlegungsschrift DE 40 40 846 A1 werden Verfahren zur Steuerung einer Innenraumklimatisierungseinrichtung beschrieben, bei denen diese Steuerung unter anderem abhängig vom Sensorsignal eines Solarsensors erfolgt.

Es sind andererseits bereits Mittel zur Sitzbelegungserkennung bekannt. So ist in der Offenlegungsschrift DE 41 10 702 A1 ein Fahrzeugsitz mit einer elektrischen Sitzheizung offenbart, bei dem Teile der Sitzheizung als Mittel zur Sitzbelegungserkennung ausgestaltet sind. Eine in der DE 41 10 936 A1 beschriebene Sensorik zur Sitzbelegungserkennung dient dort zur Ansteuerung eines Beifahrer-Airbags in Abhängigkeit davon, ob der Beifahrersitz belegt ist oder nicht. Eine weitere Sitzbelegungssensorik wird in der Offenlegungsschrift DE 43 22 159 A1 angegeben, wobei dort als Einsatzzweck neben der Ansteuerung eines Beifahrer-Aitbags die Ermittlung eines Fahrzeugbelegungsfaktors erwähnt ist, mit dem festgestellt werden soll, mit wieviel Personen das Fahrzeug welche Wegstrecke zurückgelegt hat.

Der Erfindung liegt als technisches Problem die Bereitstellung eines Verfahrens zur Steuerung einer Innenraumklimatisierungseinrichtung eines Kraftfahrzeuges zugrunde, mit dem eine vergleichsweise bedarfsgerechte Fahrzeuginnenraumklimatisierung erzielt wird.

Dieses Problem wird durch ein Verfahren mit den Merkmalen des Anspruchs 1 gelöst. Unter Verwendung einer entsprechenden Sitzbelegungssensorik wird bei diesem Verfahren vorgesehen, die einzelnen Klimatisierungskanäle, die jeweils unterschiedlichen Fahrzeuginnenraumzonen zugeordnet sind, in Abhängigkeit von der erkannten Sitzbelegung anzusteuern. Mit diesem Verfahren läßt sich die Klimatisierungswirkung gegenüber der herkömmlichen, bezüglich der Sitzbelegung unspezifischen Klimatisierungsmethode in den Bereichen, in denen sich momentan Fahrzeuginsassen befinden, erhöhen, während sie in denjenigen Innenraumzonen, in denen sich keine Fahrzeuginsassen befinden, geringer gehalten werden kann. Damit läßt sich eine räumlich gezieltere Klimatisierung durchführen, die gegenüber der sitzbelegungsunspezifischen Klimatisierung den Vorteil hat, daß sich in den mit Fahrzeuginsassen belegten Innenraumzonen Klimatisierungsleistung einsparen bzw. bei gegebener Klimatisierungsleistung schneller die gewünschte Klimatisierung erreichen läßt.

In Weiterbildung der Erfindung nach Anspruch 2 beinhaltet das Verfahren eine gezielte Ansteuerung derjenigen einer Mehrzahl von Klimatisierungskanälen einer Heizungs- und/oder Klimaanlage während eines Aufheiz- oder Abkühlvorgangs derart, daß die den Innenraumzonen mit belegten Fahrzeugsitzen zugeordneten Klimatisierungskanäle zur Erzeugung einer höheren Klimatisierungsleistung angesteuert werden als die übrigen Klimatisierungskanäle. Dies fördert die schnelle Erreichung der gewünschten Klimatisierung in denjenigen Innenraumzonen, in denen Insassen im Fahrzeug sitzen.

Bei einem nach Anspruch 3 weitergebildeten Verfahren erfolgt die Steuerung der Innenraumklimatisierungseinrichtung kombiniert in Abhängigkeit sowohl von der Sitzbelegung als auch vom Ausgangssignal eines Solarsensors. Mit diesem Verfahren läßt sich eine mit einem Solarsensor ausgerüstete Innenraumklimatisierungseinrichtung auch in den Betriebsfällen besonders bedarfsgerecht steuern, in denen der Solarsensor auf die Klimatisierung Einfluß nimmt.

Eine Weiterbildung der Erfindung nach Anspruch 4 hat ein Verfahren zum Gegenstand, das sich zur Steuerung von Innenraumklimatisierungseinrichtungen eignet, die eine ansteuerbare Scheibenabdunklungseinrichtung umfassen. Verfahrensgemäß ist eine sitzbelegungsabhängige Ansteuerung dieser Scheibenabdunklungseinrichtung vorgesehen, mit der beispielsweise im Bedarfsfall nur diejenigen Scheiben abgedunkelt werden, deren zugeordneter Fahrzeugsitz belegt ist.

Eine bevorzugte Ausführungsform der Erfindung wird nachfolgend anhand der Zeichnungen beschrieben, in denen zeigen:
- Fig. 1: ein Temperatur-Zeit-Diagramm zur Veranschaulichung eines Aufheizungsvorgangs eines Verfahrens zur Steuerung einer Innenraumklimatisierungseinrichtung eines Kraftfahrzeuges mit einer Heizungs- und Klimaanlage und
- Fig. 2: ein Diagramm der Leistung eines Luftzufuhrgebläses einer Heizungs- und Klimaanlage eines Kraftfahrzeuges in Abhängigkeit von der über einen Solarsensor erfaßten Sonneneinstrahlungsintensität zur Veranschaulichung einer verfahrensgemäßen, bedarfsgerechten Steuerung dieses Gebläses.

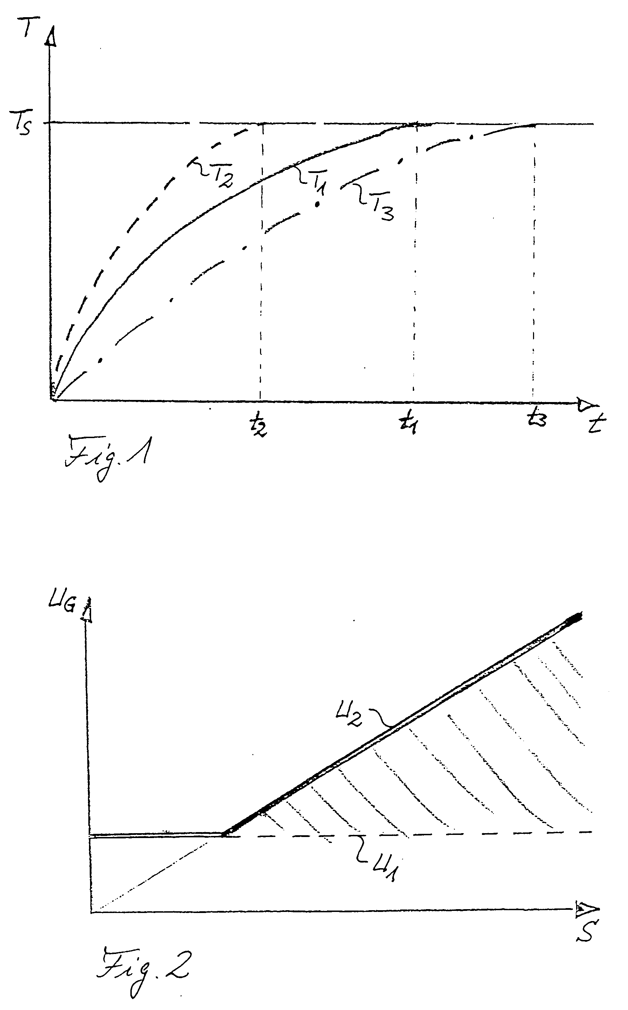

Anhand von Fig. 1 wird nachfolgend ein Vorgang zur Aufheizung des Fahrzeuginnenraums durch erfindungsgemäße Steuerung einer Heizungs- und Klimaanlage, die einen fahrerseitigen und einen beifahrerseitigen Klimatisierungskanal umfaßt, erläutert und einem herkömmlichen, sitzbelegungsunspezifischen Aufheizvorgang gegenübergestellt.

Sobald über ein entsprechendes Bedienelement eine Innenraumaufheizung angefordert wird, erfolgt beim herkömmlichen Aufheizvorgang eine Zuführung erwärmter Luft gleichmäßig über alle vorhandenen Klimatisierungskanäle der Heizungs- und Klimaanlage. Damit ergibt sich auf der Fahrer- und auf der Beifahrerseite dieselbe Innenraumtemperaturerhöhung, wie sie in Fig. 1 beispielhaft durch die durchgezogene Kennlinie (T₁) zeitabhängig dargestellt ist. Durch die gleichmäßige Verteilung der Heizleistung auf die Fahrer- und die Beifahrerseite wird auf beiden Seiten gleichzeitig zu einem bestimmten Zeitpunkt (t1) die gewünschte, eingestellte Innenraum-Solltemperatur (T_{S}) erreicht.

Bei dem erfindungsgemäßen Verfahren wird hingegen zunächst durch eine herkömmliche Sitzbelegungssensorik, die jedem Fahrzeugsitz zugeordnet ist, festgestellt, auf welchen Fahrzeugsitzen sich überhaupt Fahrzeuginsassen befinden, ob also beispielsweise der Beifahrersitz belegt ist. Die Signalübertragung von der Sitzbelegungssensorik zur Steuereinheit der Heizungs- und Klimaanlage kann je nach vorhandener Fahrzeugelektrik über normale Verkabelung oder über einen Datenbus erfolgen. Bei Feststellung einer Belegung aller Fahrzeugsitze erfolgt der Aufheizvorgang in der obigen, herkömmlichen Art und Weise. Wenn hingegen beispielsweise festgestellt wird, daß zwar der Fahrersitz, nicht jedoch der Beifahrersitz belegt ist, wird die Heizungs- und Klimaanlage so angesteuert, daß über den fahrerseitigen Klimatisierungskanal eine höhere Wärmezufuhr in den Innenraum erfolgt als über den beifahrerseitigen Klimatisierungskanal. Mit anderen Worten wird die vorhandene Heizleistung unsymmetrisch zwischen Fahrer- und Beifahrerseite aufgeteilt, indem der Fahrerseite, auf der sich ein Fahrzeuginsasse befindet, mehr Heizleistung zugeteilt wird als der nichtbesetzten Beifahrerseite. Beispielhaft ergibt sich damit ein zeitlicher Verlauf der Innenraumtemperaturerhöhung auf der Fahrerseite, wie er in Fig. 1 durch die gestrichelte Kennlinie (T₂) dargestellt ist. Wegen der höheren Heizleistung erfolgt die Innenraumtemperaturerhöhung auf der besetzten Fahrerseite schneller als bei der herkömmlichen, sitzbelegungsunspezifischen Aufheizung, so daß die Solltemperatur (T_{S}) bereits zu einem früheren Zeitpunkt (t₂) erreicht wird. Dagegen wird die Aufheizung auf der Beifahrerseite auf eine Minimalaufheizung begrenzt, so daß sich im Vergleich zum sitzbelegungsunspezifischen Aufheizvorgang eine langsamere Innenraumtemperaturerhöhung in diesem Innenraumbereich ergibt, wie sie in Fig. 1 durch die strichpunktierte Kennlinie (T₃) repräsentiert wird. Die Solltemperatur (T_{S}) wird dort erst zu einem späteren Zeitpunkt (t₃) als beim sitzbelegungsunspezifischen Aufheizvorgang erreicht, dies stört jedoch nicht weiter, da sich in diesem Innenraumbereich kein Fahrgast befindet.

Aus der Beschreibung dieses Aufheizvorganges wird deutlich, daß durch das erfindungsgemäße Verfahren die verfügbare Heizleistung sitzbelegungsspezifisch gezielt auf die einzelnen, den jeweiligen Klimatisierungskanälen zugeordneten Fahrzeuginnenraumbereiche so aufgeteilt werden kann, daß die gewünschte Solltemperatur in denjenigen Inneraumbereichen, in denen sich ein Fahrzeuginsasse befindet, besonders rasch erreicht wird, während in den übrigen Bereichen eine Grundklimatisierung erfolgt, die unerwünscht hohe Temperaturgradienten im Fahrzeuginnenraum verhindert und damit beispielsweise die Entstehung von sogenannten Kaltluftwalzen vermeidet. In sinngemäß analoger Weise erfolgen auch Abkühlvorgänge bei dem erfindungsgemäßen Verfahren gezielt in Abhängigkeit von der Sitzbelegung im Fahrzeuginnenraum unter Bereitstellung einer höheren Kälteleistung für diejenigen Klimatisierungskanäle, die schwerpunktmäßig Innenraumbereichen zugeordnet sind, in welchen der oder die entsprechenden Fahrzeugsitze belegt sind.

Anhand von Fig. 2 wird nachstehend ein weiterer Aspekt des erfindungsgemäßen Verfahrens zur Steuerung der Heizungs- und Klimaanlage erläutert, der sich auf die Klimatisierungssteuerung in Abhängigkeit eines im Fahrzeug vorgesehenen Solarsensors bezieht. Im Diagramm von Fig. 2 sind auf der Abszisse die von dem Solarsensor erfaßte Sonneneinstrahlungsintensität (S) und auf der Ordinate die an ein Luftzufuhrgebläse der Heizungs- und Klimaanlage angelegte Spannung (U_{G}) abgetragen, wobei letztere ein Maß für die Gebläseleistung ist. Herkömmlicherweise erfolgt in Abhängigkeit vom Solarsensorsignal (S) sitzbelegungsunspezifisch eine bedarfsabhängige Absenkung bzw. Anhebung der Temperatur und/oder der Luftmenge gleichmäßig über alle Klimatisierungs-, d.h. Belüftungskanäle, denen Luft von dem Gebläse zugeführt werden kann.

Um diese Steuerung noch bedarfsoptimierter auszuführen, wird nun verfahrensgemäß die Gebläsespannung (U_{G}) nur angehoben, wenn dies zum einen aufgrund einer vom Solarsensor festgestellten, erhöhten Sonneneinstrahlungsintensität (S) indiziert ist und sich zum anderen in dem Innenraumbereich, der dem jeweiligen Klimatisierungskanal zugeordnet ist, ein Fahrzeuginsasse befindet, was wiederum über ein entsprechendes Signal der Sitzbelegungssensorik erkannt wird. In Fig. 2 ist als durchgezogene Kurve (U₂) eine typische herkömmliche Kennlinie der Anhebung der Gebläseleistung (U_{G}) in Abhängigkeit von der Sonneneinstrahlungsintensität (S) dargestellt, die ab einer bestimmten Einstrahlungsintensität gegenüber der normalen Gebläseleistung, repräsentiert durch die gestrichelte, horizontale Kurve (U₁) linear ansteigt. Wenn nun eine erhöhte Einstrahlungsintensität (S) vorliegt, jedoch beispielsweise der Beifahrersitz nicht belegt ist, so wird eine erhöhte, der angehobenen Gebläsespannung (U₂) entsprechende Luftmenge nur der Fahrerseite über den entsprechenden Belüftungskanal zugeführt, während auf der Beifahrerseite lediglich die normale, nicht erhöhte, der normalen Gebläsespannung (U₁) entsprechende Luftmange zugeführt wird. Damit können gegebenenfalls unnötige Geräuscherhöhungen durch das Luftzufuhrgebläse vermieden werden. Durch die Schraffierung des Gebietes zwischen den beiden Kurven (U₁, U₂) in Fig. 2 ist angedeutet, daß je nach Bedarf jeder beliebige Gebläsespannungswert zwischen den beiden Kurven (U₁, U₂) bei einer gegebenen Sonneneinstrahlungsintensität (S) und damit ein beliebiges, reduziertes Maß an Gebläseleistungsanhebung für diejenigen Innenraumbereiche eingestellt werden kann, deren zugehörige Fahrzeugsitze nicht belegt sind.

Des weiteren sind folgende, zeichnerisch nicht näher veranschaulichte Steuerungsmaßnahmen der Kraftfahrzeug-Klimatisierungseinrichtung mit dem erfindungsgemäßen Verfahren vorgesehen. Zum einen können die einzelnen Klimatisierungskanäle in ihrer Klimatisierungswirkung einzeln automatisch zu- oder abgeschaltet werden, beispielsweise kann je nach Insassenbelegung des Fondraums die Fondraumklimatisierung gezielt aktiviert oder deaktiviert werden. Des weiteren kann eine bei der Heizungs- und Klimaanlage vorgesehene Sonderfunktion "Restwärme" nach dem Abstellen der Zündung sitzbelegungsabhängig automatisch zugeschaltet werden, wenn der oder die Fahrzeuginsassen nicht aussteigen, sondern wenigstens ein Fahrzeugsitz belegt bleibt. Wenn die Klimatisierungseinrichtung eine Scheibenabdunklungseinrichtung, z.B. in Form entsprechender Rollos, beinhaltet, kann verfahrensgemäß vorgesehen sein, zur verbesserten Klimatisierung einzelne Scheiben sitzbelegungsabhängig abzudunkeln, d.h. jeweils nur diejenigen Scheiben abzudunkeln, hinter denen sich Fahrzeuginsassen befinden.

Die vorstehende Beschreibung eines Verfahrensbeispiels zeigt, daß das erfindungsgemäße Verfahren zur Steuerung einer Klimatisierungseinrichtung für einen Fahrzeuginnenraum eine sehr bedarfsgerechte Klimatisierung der einzelnen Innenraumbereiche in Abhängigkeit von der Belegung durch Fahrzeuginsassen ermöglicht.

## Patentansprüche

1. Verfahren zur Steuerung einer Klimatisierungseinrichtung für einen Fahrzeuginnenraum, die mehrere Klimatisierungskanäle für unterschiedliche Innenraumzonen aufweist,
**dadurch gekennzeichnet, daß**
die einzelnen Klimatisierungskanäle sitzbelegungsabhängig angesteuert werden.

2. Verfahren nach Abspruch 1 für eine Klimatisierungseinrichtung mit einer Heizungs- und/oder Klimaanlage, weiter
**dadurch gekennzeichnet, daß**
während eines Aufheiz- oder Abkühlvorgangs diejenigen Klimatisierungskanäle, die denjenigen Fahrzeuginnenraumzonen zugeordnet sind, in denen ein jeweiliger Fahrzeugsitz belegt ist, zur Abgabe einer höheren Klimatisierungsleistung als diejenige der übrigen Klimatisierungskanäle angesteuert werden.

3. Verfahren nach Abspruch 1 oder 2 für eine Klimatisierungseinrichtung mit einer Solarsensor, weiter
**dadurch gekennzeichnet, daß**
bei einer über den Solarsensor erkannten, erhöhten Sonneneinstrahlungsintensität gezielt diejenigen Klimatisierungskanäle, die denjenigen Fahrzeuginnenraumzonen zugeordnet sind, in denen ein jeweiliger Fahrzeugsitz belegt ist, zur Erzielung einer erhöhten Klimatisierungswirkung angesteuert werden.

4. Verfahren nach einem der Absprüche 1 bis 3 für eine Klimatisierungseinrichtung mit einer ansteuerbaren Scheibenabdunklungseinrichtung, weiter
**dadurch gekennzeichnet, daß**
die Scheibenabdunklungseinrichtung zur Abdunklung spezifisch derjenigen Scheiben ansteuerbar ist, in deren Nähe sich ein belegter Fahrzeugsitz befindet.
